# EUROPEAN PATENT SPECIFICATION

(11) **EP 2 730 470 B1**
(45) Date of publication and mention of the grant of the patent: **10.05.2017**
(21) Application number: 12382445.0
(22) Date of filing: 12.11.2012
(51) Int. Cl.: B60S 1/34, B60S 1/20, B60S 1/08

(54) **Windshield wiper system of linear type for vehicles**
Scheibenwischsystem des linearen Typs für Fahrzeuge
Système d'essuie-glace pour véhicules de type linéaire

(43) Date of publication of application: 14.05.2014
(73) Proprietor: Doga S.A., 08630 Abrera (ES)
(72) Inventor: Fernández Lazo, Juan, 08630 ABRERA (ES); De La Fuente Pinto, Raul, 08630 ABRERA (ES); Sánchez Elvira, Sergi, 08630 ABRERA (ES)
(74) Representative: Oficina Ponti, SLP

(56) References cited:
- EP-A2- 0 939 014
- WO-A1-96/30237
- DE-A1- 3 935 830
- DE-C1- 4 234 203
- FR-A1- 2 732 287
- FR-A1- 2 784 338

## Description

The present invention relates to a windshield wiper system of linear type for vehicles.

The windshield wiper system of the present invention is adaptable to flat, radial or different curvature windshields, and is applicable within the technical sector of transportation, more specifically in the aid of visibility during the operation of trolleys, agricultural and construction vehicles, ships, trains, etc.

### Background of the invention

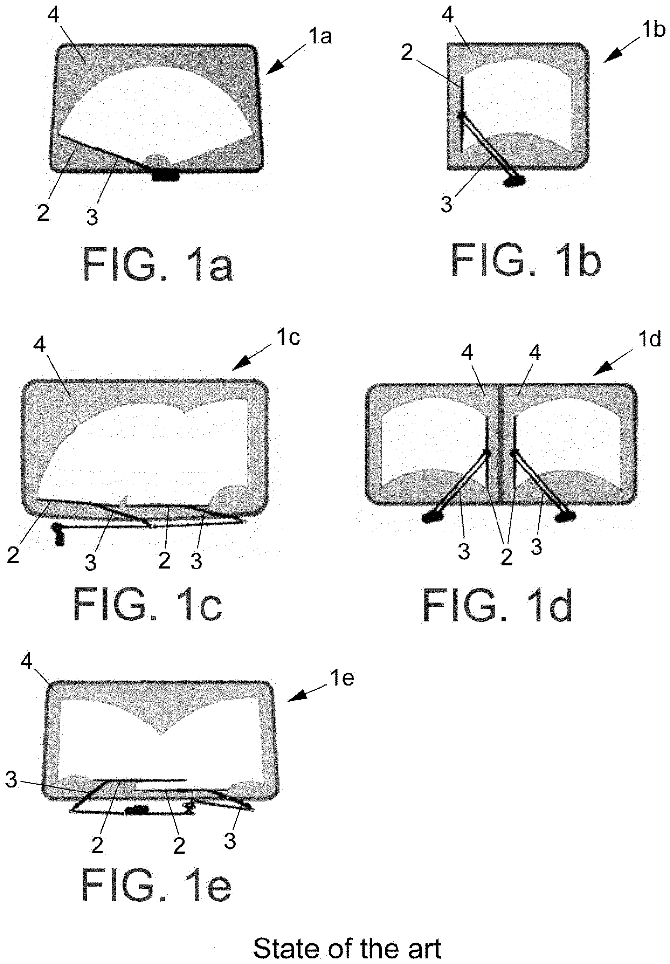

Known windshield wipers comprise a windshield wiper blade fixed to a windshield wiper arm by means of a suitable adapting device, said blade including a rubber profile that works as a lip designed to come into contact with the windshield of the vehicle to carry out its wiping. Currently known are different types of sweeping for windshield wiper systems, such as those listed below:
- "Simple" sweeping type, composed of a single windshield wiper arm, whose arm and blade perform a circular section sweep (see figure 1 a);
- "Pantograph" sweeping type, composed of a single windshield wiper arm, whose arm performs a circular section sweep, while the blade is always shifted vertically according to a linear motion (see figure 1 b);
- "Tandem" sweeping type, composed of two arms that respectively perform a circular section sweep and simultaneously move in the same direction (see figure 1 c);
- "Pantograph" double sweeping type, which is composed of two "pantograph" sweeping arms intended to wipe two adjacent windshields, and that generally move simultaneously in opposite directions (see figure 1d);
- "Panoramic cross tandem" sweeping type, composed of two arms that respectively perform a circular section sweep and simultaneously move in opposite directions (see figure 1e);

The sweeping types indicated above have limitations when adapting to windshields with pronounced curvatures in a horizontal cut plane. Said windshields have a geometry which use has a strong growing tendency in vehicles such as trolleys, agricultural and construction vehicles, ships or trains, for style reasons (barrel, panoramic and/or bubble profiles).

The usual selection for this type of windshield wiper is the pantograph-sweep type (see figure 1b), since it ensures the support of the blade on the windshield thanks to the blade being always kept in a vertical position, which is a characteristic of this type of sweeping.

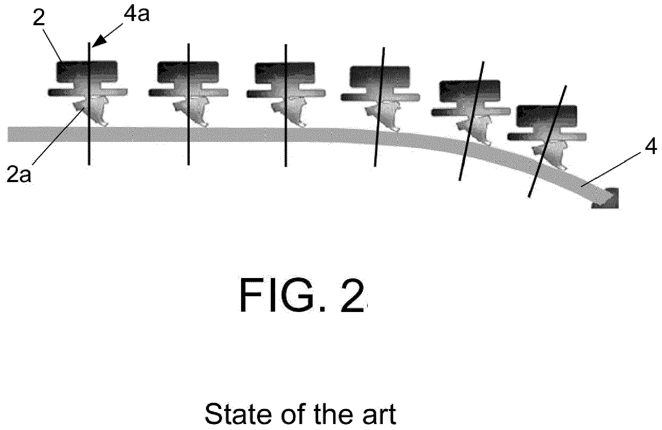

However, this type of windshield wiper has an important limitation relating to a parameter named "stroke angle", defined as the angle between the rubber lip of the blade and the windshield, whose control is essential in order to ensure good sweeping quality and prevent noise and "chattering" events during the windshield wiping process. The pantograph sweeping type in particular, and generally any of the other sweeping types described, cannot compensate the effect that the curvature of the windshield, according to a horizontal cut plane, has on said stroke angle, especially in the end positions of the blade (see figure 2).

Another additional problem that the pantograph sweeping type has, upon applying it to curved windshields, is related to the additional stress that this curvature applies to the motor, and to the mechanical stresses generated by the pivoting of a spacing element of two rods that make up the arm, on the respective tubes and hinges of said rods, due to the "nailing" effect of the blade in the end sweeping positions.

The problems previously mentioned cause a lower useful life of the wipers in applications with curved windshields, issues with the sweeping clarity and therefore with visibility, limitations in the minimum distance between the end positions of the blade and the vehicle's panels, noises and "chattering".

There are proposals intended to solve these problems, some based on complex mechanical drive systems, as for example those found in utility model ES1039959 by the same applicant of the present invention, wherein the arm that holds the blade is fixed to a cursor or carriage that runs through a curved guide parallel to the upper contour of the windshield, and connected at the same time to a complex mechanism of connecting rods actuated by a geared motor to generate a linear to and fro motion.

Also, there are other systems known as windshield wipers of linear type characterized by the use of a carriage driven by a belt and adjacent to an arm and/or blade, as for example the one described in patent DE2639404 A1 whose system has been marketed for marine applications; or other systems that are based on the same principle but using a worm gear or rack system as a means of transmission of movement from a motor to the carriage, such as the systems described in patents FR2809788 A1 or FR2784338 A1; or also other systems that use a cable as a means of driving the carriage, such as the windshield wipers systems of linear type described in patents DE102004052325 A1, FR2827240 A1 or DE3724856 A1.

This type of linear sweeping manages to avoid, particularly, the pivoting effect of the spacing element and compensate for changes in the relative orientation between the blade and the normal direction to the windshield, obtaining thus an absolute control of the stroke angle between the lip of the blade and the windshield and minimizing the mechanical stresses on the system.

Nevertheless, all these solutions, among others currently known, based on sweeping systems of linear type, have considerable restrictions for their use in multiple applications, either due to their frequency limitations, or the excessive functional and/or productive complexity of the system being used, which limits their possibilities of industrialization or leads to some noise or useful life levels incompatible with the current requirements levels for this type of windshield wipers. For this reason, the implementation of systems of linear type in the market is still currently very marginal.

Patent US 5,826,295 A describes a windshield wiper system of linear type that includes a chain or driving belt mounted between two pulley wheels or sprockets driven by a motor, and a carriage with a wiper arm and its blade which is driven by said belt along a linear to and fro motion path between two fixed ends of stroke. The motor always rotates in the same direction, so that in a forward direction the arm is driven by the upper section of the belt, while in the reverse direction the arm is driven by the lower section of the belt. The system also comprises electronic control means which include a microprocessor capable of regulating the speed of the motor reducing it when the arm is close to each end of stroke. In this way, the changes in direction of the carriage and the blade are smoothed since this change occurs in a mechanical fashion.

However, this type of system has a series of drawbacks, including:
- To control the carriage position, several end of stroke sensors of the to and fro motion are necessary.
- The electric motor always rotates in one direction, which implies a complex control to achieve the to and fro motion of the carriage.
- The sweeping is always complete between the end of stroke stops, thus it is not possible to carry out different types of partial sweepings because the motor rotates in one direction.
- Is not applicable to curved windshields due to the placement of the pulleys.
- The printed circuit board that is included in the microprocessor is connected to the motor independently, thus increasing the total volume of the engine assembly.
EP-A-0939014 shows the preamble of claim 1.

### Description of the invention

The object of the windshield wiper system of linear type for vehicles of the present invention is to solve the drawbacks that the systems known in the state of the art have, providing a windshield wiper system of linear type suitable for flat or curved windshields, and which allows performing more optimized motion sequences of the windshield wiper arm.

The windshield wiper system of linear type for vehicles, object of the present invention, comprises a blade attached to a wiper arm, a carriage bearing said arm capable of being driven along a fixed guide according to an alternative to and fro motion, said guide being provided with a profile substantially coincident with the sweeping profile of the windshield, a motor intended to actuate said carriage by means of transmission means, and electronic control means capable of regulating the movement of the carriage, and is characterized in that the electronic control means are integrated into the motor itself, said control means including a single sensor for the starting position of the carriage, and a microprocessor capable of monitoring the position and speed of the carriage, with capability of communicating with the vehicle, and capable of monitoring different pre-established sweeping patterns depending on the specific needs of the user.

Thus, a windshield wiper system of linear type is obtained for its application in a wide range of different vehicles with very diverse requirements, that allows reproducing, conveniently, from the point of view of the stroke angle optimization, the geometry of the windshield and therefore adapting to the curvature of said windshield, eliminating the drawbacks that the traditional sweeping types have on this kind of curved windshields, as will be explained further on.

Advantageously, the guide comprises a cross section profile, preferably with an oval shape, provided with two rounded upper and lower opposite ends, and two slightly curved or flat opposite lateral sides.

Thanks to the configuration of the guide's profile, the desired stroke angle is achieved during the sweeping path of the blade for any geometry and curvature of the windshield.

Also advantageously, the carriage includes a support provided with a connecting shaft to the windshield wiper arm, and a housing provided with two sections of sliding material coupled by shape complementarity to both rounded ends of the guide, and a set of wheels intended to slide on both lateral sides of the guide. In addition these wheels compensate the pivoting and pitching efforts resulting from the the arm and blade dragging.

According to an embodiment of the invention, the carriage includes two pairs of wheels, one pair of wheels intended to be in contact with the upper part of one of the lateral sides of the guide, and the other pair of wheels intended to be in contact with the lower part of the opposite lateral side of said guide.

According to another embodiment of the invention, the carriage includes four pairs of wheels distributed for their coupling in both lateral sides of the guide and in both upper and lower parts of said lateral sides of the guide.

Advantageously, the guide may comprise a straight line profile, being applicable to substantially flat windshields; or it can comprise a curved profile, being applicable to curved windshields.

Optionally, the housing of the carriage is divided into three parts, including a central structural part fixed to the support of the arm, and two articulated parts on both ends of said central part provided with the respective sections of sliding material and the wheels.

Preferably, the transmission means comprise a sprocket wheel fixed to the output shaft of the motor, a closed loop toothed belt driven by said sprocket wheel and arranged between two ends of the stroke, said carriage being fixed to the belt so it can be dragged in a to and fro motion, and two pulleys intended to the guidance of said belt.

Advantageously, said pulleys include belt tensioner elements for said belt. These tensioner elements are able to compensate the changes in length underwent by the belt as the carriage position changes, and in turn allow equalizing the tension of the belt during the movement of the carriage in its different positions along its path.

Preferably, the system includes a front cover attached to a rear support of the guide fixed to the chassis of the vehicle.

Also preferably, the system includes a brush intended to limit the access of dirt inside the system and intended to clean at the same time an arm support during the movement of the carriage. According to the invention, the control means comprise a magnet placed on the shaft of the motor, a Hall sensor associated with said magnet intended to read the position of the drive shaft, a voltage regulator, a current sensor intended to obtain the current consumed by the motor, and a microprocessor capable of receiving the signal from said Hall sensor, and sending to the motor a voltage regulated by a power stage, which allows obtaining by overconsumption the starting position of the carriage corresponding to an end of stroke of the guide, said microprocessor further being capable of processing digital inputs corresponding to different modes of operation, and sending to the motor the corresponding commands for controlling parameters such as the reverse rotation of the motor, and the speed, acceleration and braking of the carriage depending on the mode selected by the user, thus allowing to perform different sweep types depending on the needs.

The main advantages of the electronic control means are that they allow monitoring the position and speed of the carriage, monitoring the desired behavior in the event of several obstacles or inadequate working conditions, and monitoring the sections and speeds to sweep each time depending on the specific needs of the operator or driver.

Therefore, the capacity to sweep specific sectors or to carry out the complete sweeping depending on what is required is obtained, thus providing the capacity of reaching higher frequencies of sweeping, compatible with the visibility needs of the vehicle and current requirements, all without surpassing some limits of inertia which allow reaching noise and useful life levels within the normal requirements for this type of systems.

Also, allowing to improve the visibility of the user by hiding (when not in use) the blade and the windshield wiper arm under the lateral panel of the windshield. To such effect, the panel should have an adequate geometry.

Other advantages of the control means as opposed to the windshield wiper system of linear types known in the art are described below:
- Since said control means are integrated inside the engine assembly, the number of components as well as the volume taken is reduced.
- The carriage's to and fro motion control is simplified, since the motor rotates in both directions, thus achieving more optimized movement sequences.
- Only one sensor, which is capable of obtaining the absolute position of the drive shaft from 0° to 360°, is used because of the system stops due to overconsumption, thus preventing the need to place end of stroke sensors and in some points along the guide's travel path.
- When changing the direction of the to and fro motion from the motor, it allows to place the pulleys in a way so that the guide may be curved, and thus apply it to curved windshields.

### Brief description of the drawings

In order to facilitate the description of all that has been explained above, attached is a set of drawings in which, schematically and only by way of a non-limiting example, a preferred embodiment of the windshield wiper system of linear type for vehicles of the invention is represented, in which:
Figures 1a to 1e respectively show different types of windshield wipers sweep known in the state of the art;
Figure 2 is a schematic view in a transversal section of a curved windshield and a wiper blade of the pantograph-sweep type known in the state of the art, showing the stroke angle produced during the sweep of the blade;
Figure 3 is a front elevational view of the windshield wiper system of linear type of the present invention, showing the arm on one end in its initial position and the same arm displayed in discontinuous lines displaced to the opposite end;
Figure 4 is a side elevational view of the windshield wiper system shown in Figure 3;
Figure 5 is a plan view of the windshield wiper system shown in Figures 3 and 4;
Figure 6 is a partial perspective view of a straight trajectory guide coupled in its respective housing with the cover assembled;
Figure 7 is a transversal sectional view of the guide, housing and cover set, shown in Figure 6;
Figure 8 is a perspective view of a carriage according to a first preferred embodiment of the invention;
Figure 9 is a side elevational view of the carriage shown in Figure 8;
Figure 10 is a plan view of the carriage shown in Figures 8 and 9;
Figure 11 is a perspective view of the carriage according to a second preferred embodiment of the invention;
Figure 12 is a side elevational view of the carriage shown in Figure 11;
Figure 13 is a plan view of the carriage shown in Figures 11 and 12;
Figure 14 is a perspective view of a curved trajectory guide coupled to its respective housing;
Figure 15 is a partial perspective view of the windshield wiper system of the present invention mounted on a curved windshield;
Figure 16 is a partial perspective view of an articulated-type carriage assembled on a guide with a curved profile;
Figure 17 is a perspective view of the motor with the sprocket wheel coupled thereto, and with the driving belt engaged to said sprocket wheel and to some guiding pulleys for said belt, also showing some belt tensioners;
Figure 18 is a plan view of the set shown in Figure 17;
Figure 19 is a plan view of the set shown in Figures 17 and 18, also showing the carriage coupled to the guide;
Figure 20 is a block diagram of the electronic control means of the windshield wiper system of the present invention;
Figure 21 is a flow diagram of the electronic control means operation of the windshield wiper system of the present invention;
Figure 22 is a positional diagram of the windshield wiper arm along to and fro cycle;
Figure 23 is a speed diagram of the windshield wiper arm along to and fro cycle; and
Figure 24 is an acceleration diagram of the windshield wiper arm along to and fro cycle.

### Description of a preferred embodiment

As has been described in greater detail in the Background of the Invention section, there are different windshield wiper systems known 1 a to 1e, that use different types of sweeping, such as: "simple" type sweeping (see Figure 1a), "pantograph" type sweeping (see Figure 1b), "tandem" type sweeping (see Figure 1c), double "pantograph" type sweeping (see Figure 1d), and "panoramic crossed tandem" type sweeping (see Figure 1e). All of these windshield wiper systems include a blade 2 coupled to a windshield wiper arm 3 by means of an adequate adapter device, with said blade 2 including a lip-like rubber profile 2a, intended to come into contact with the windshield 4 of the vehicle to wipe it.

These types of sweeping present limitations in their adaptation to windshields 4 with pronounced curvatures in a horizontal cutting plane. The usual selection for this type of curved windshields 4 is the pantograph type sweeping (see Figure 1b), since it allows ensuring at all times that the blade 2 is resting on the windshield 4, due to the fact that the blade 2 is always kept in a vertical position.

However, neither the pantograph type sweeping in particular, and in general none of the other described types of sweeping, may compensate the effect that the curvature of the windshield 4 has on the stroke angle of the blade 2, especially in most extreme positions of the blades 2 (see Figure 2), creating noise and "chattering" during the windshield sweeping process.

These disadvantages are solved due to the systems known as windshield wipers of linear type characterized in that they use a carriage 5 fixed to the arm 3 with the blade 2, which is movable over a guide 6 as it is pulled by a belt 7. These windshield wiper systems of linear type are applicable to a wide range of different vehicles with various requirements, which would allow reproducing, conveniently, from the point of view of the stroke angle optimization, the geometry of the windshield 4 and therefore adapting to the curvature of said windshield 4.

On the other hand, as mentioned before, with this windshield wipers of linear type, it is feasible to prevent precisely the pivoting effect of the spacing element of the arm 3 and compensate the changes in relative orientation between the blade 2 and the normal direction 4a to the windshield 4, thus achieving an absolute control of the stroke angle between the lip 2a of the blade 2 and the windshield 4 and reducing to a minimum the mechanical stresses on the system.

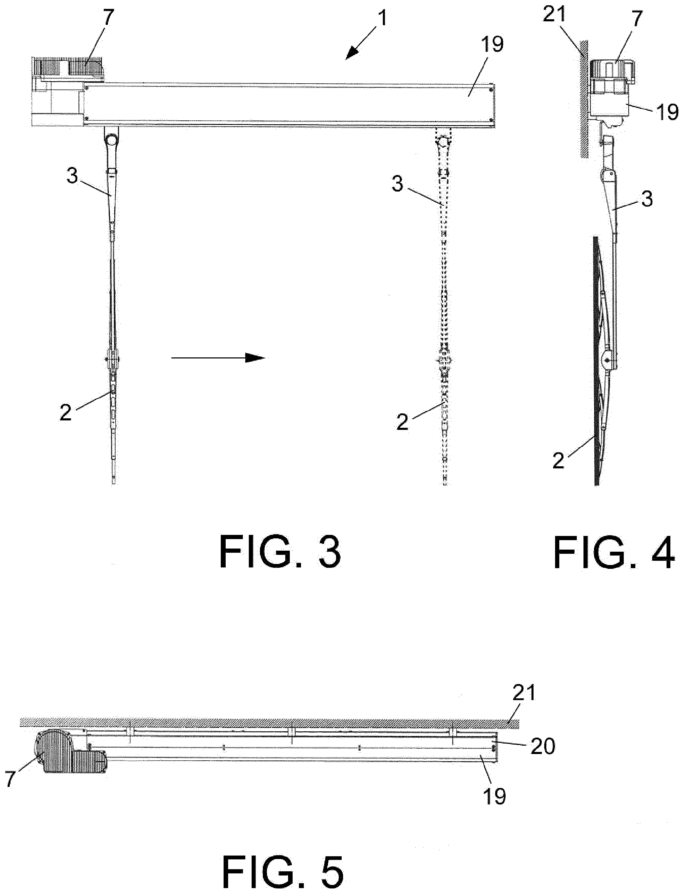

Making now reference to Figures 3 to 10, the windshield wiper system of linear type 1 of the present invention comprises a blade 2 attached to a wiper arm 3, a carriage 5 bearing said arm 3 capable of being driven along a fixed guide 6 with an alternative to and fro motion, said guide 6 being provided with a profile substantially coincident with the sweeping profile of the windshield 4, a motor 7 intended to actuate said carriage 5 by means of transmission means, and electronic control means capable of regulating the movement of the carriage 5.

Said electronic control means are integrated into the motor 7 itself, said control means including a single Hall sensor 8 for the starting position of the carriage 5, and a microprocessor 9 capable of monitoring the position and speed of the carriages, with capability of communicating with the vehicle, and capable of monitoring different pre-established sweeping patterns depending on the specific needs of the user, as will be explained below.

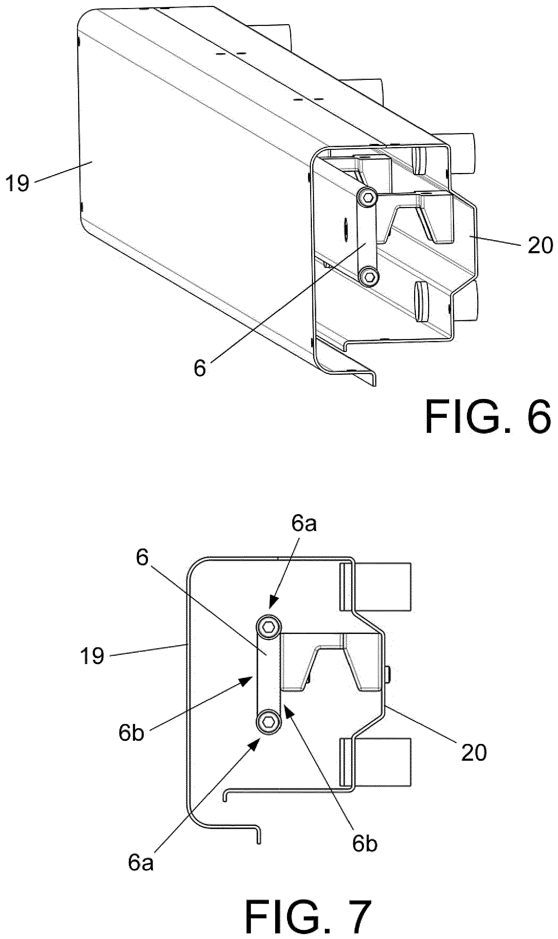

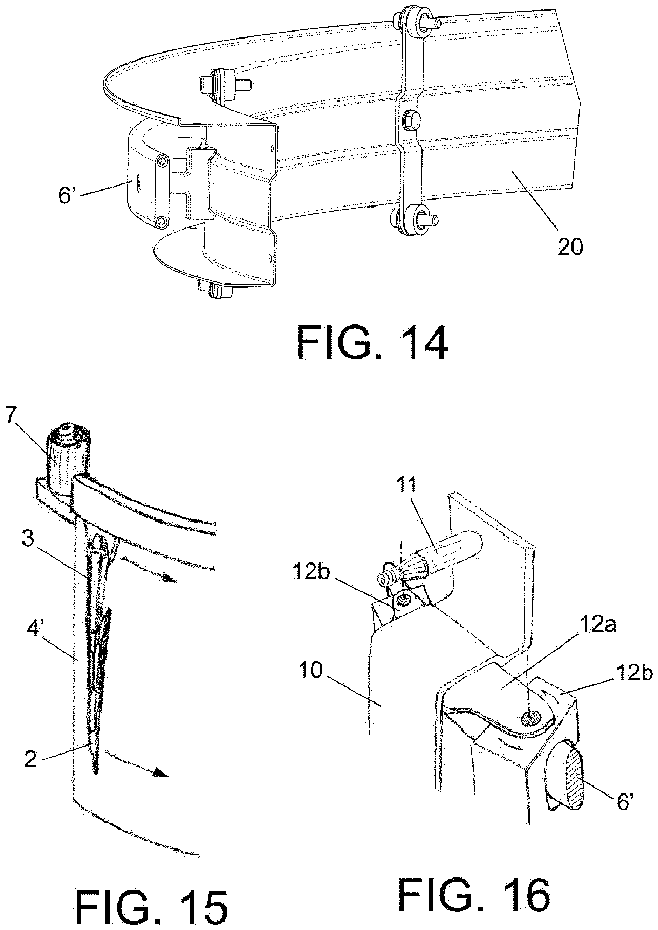

As shown in Figure 7, the guide 6 comprises a profile with two rounded upper and lower opposing sides 6a and two flat lateral opposing sides 6b. It is worth mentioning that the transversal profile of said guide 6 may have an oval shape, being both lateral sides 6b in this case slightly curved (see Figure 16). In both cases, due to the guide's profile 6, the desired stroke angle is achieved during the sweeping trajectory of the blade 2 and for any geometry and curvature of the windshield 4.

The guide 6 includes some ends of stroke that are managed by the control means by means of the Hall sensor 8 incorporated into said motor 7, further including some muffled stops for the end of stroke.

Likewise, the guide 6 is made preferably of an aluminum profile, and it features a variable curvature also adaptable to the curvature of the windshield 4. Therefore, the guide 6 may feature a straight-line profile applicable to substantially flat windshields 4 (see Figures 3 to 7), or the guide 6' may present a curved profile applicable to curved windshields 4' (see figures 14 to 16).

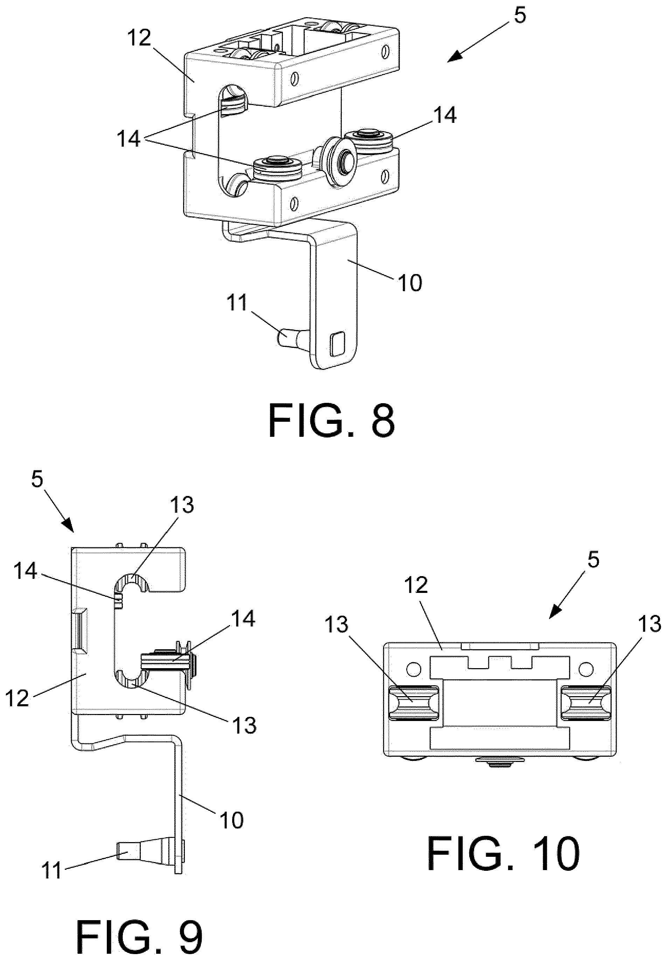

As shown in Figures 8 to 10, the carriage 5 includes a support 10 provided with a connecting shaft 11 to the wiper arm 3, and a housing 12 provided with two sections 13 made of a sliding material coupled by shape complementarity to both rounded ends 6a of the guide 6, and a set of wheels 14 intended to slide over both lateral sides 6b of the guide 6. Said wheels 14 also allow compensating the pivoting and pitching efforts resulting from dragging the arm 3 and the blade 2.

According to a first embodiment of the carriage 5 shown in Figures 8 to 10, the carriage 5 includes two pairs of wheels 14, one pair of wheels 14 intended to be in contact with the upper part of one of the lateral sides 6b of the guide 6, and the other pair of wheels 14 intended to be in contact with the lower part of the opposite lateral side 6b of the guide 6.

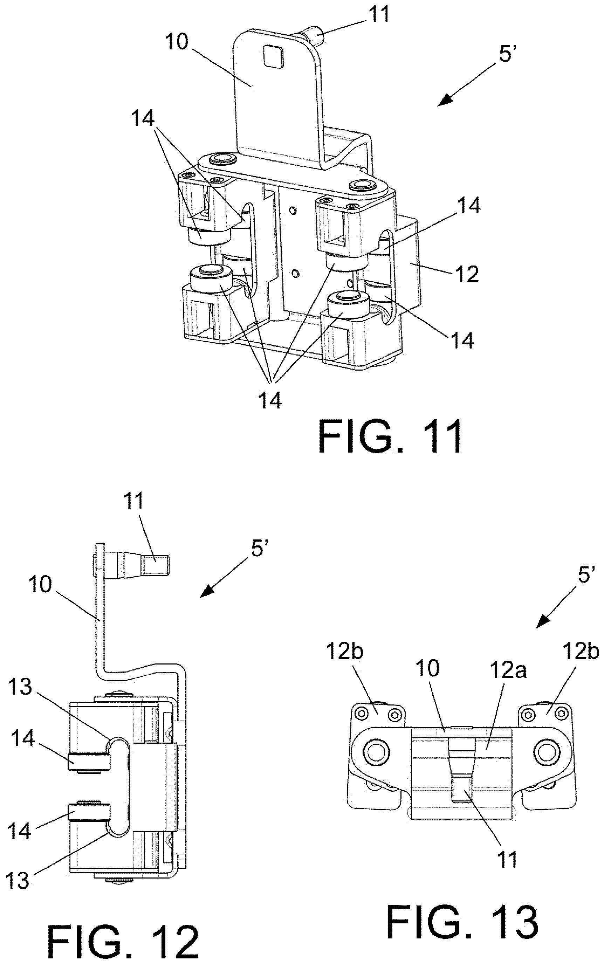

According to a second embodiment of the carriage shown in figures 11 to 13, the carriage 5' includes four pairs of wheels 14 distributed for their coupling to both lateral sides 6b of the guide 6 and to both upper and lower parts of said lateral sides 6b of the guide 6.

For curved windshields 4', the carriage 5' has the capacity of adapting to the different curvatures of the profile of the guide 6'. To that end, the housing 12 of the carriage 5' is divided into three parts (see Figures 13 and 16), including a structural central part 12a fixed to the support of the arm 10, and two articulated parts 12b on both ends of said central part 12a, which are capable of pivoting relative to the central part 12a according to two shafts introduced for that purpose. Said two articulated parts 12b are provided with respective sections of sliding material 13 and the wheels 14. Alternatively, for flat windshields 4 or windshields with fixed curvature, a fixed carriage 5 with no articulations may also be used (see Figures 11 to 13).

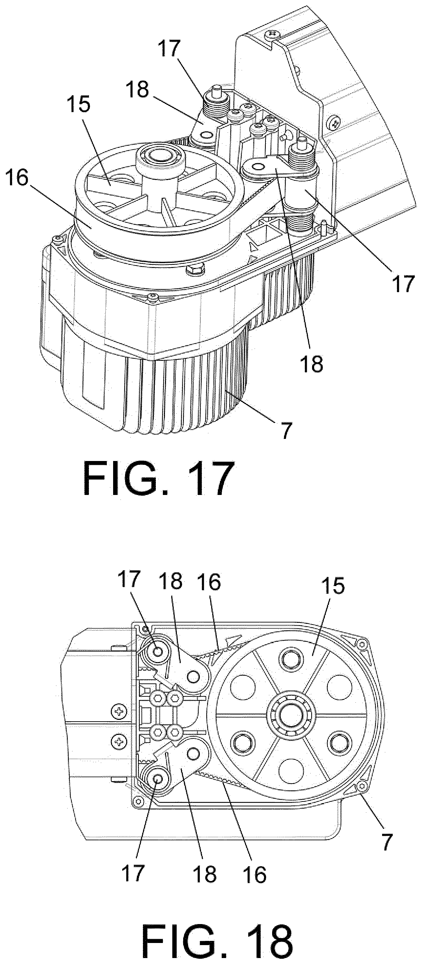

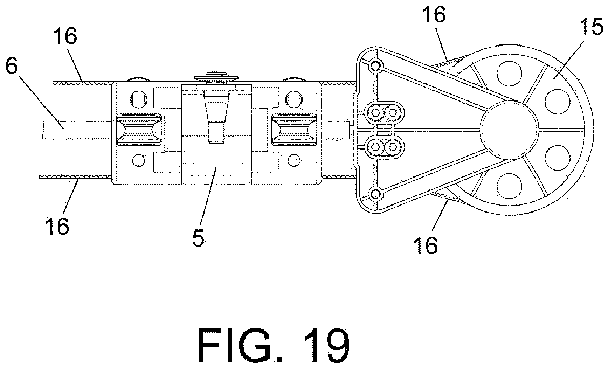

As shown in Figures 17 to 19, the transmission means comprise a sprocket wheel 15 fixed to the output shaft of the motor 7, a closed-loop toothed belt 16 driven by said sprocket wheel 15 and arranged between two ends of stroke, said carriage 5 being fixed to the belt 16 to be dragged according to the to and fro motion, and two pulleys 17 intended to the guidance of said belt 16. The belt 16 is preferably made of polyurethane and reinforced with steel cables.

Said pulleys 17 include two tensioner elements 18 for said belt 16 capable of compensating the changes in length underwent by the belt 16 as the position of the carriage 5 changes, and in turn allow equalizing the tension of the belt 16 during the movement of the carriage 5 in its different positions along its path.

On the other hand, as may be seen in Figures 3 to 7, the windshield wiper system 1 includes a front cover 19 connected to a rear support 20 of the guide 6 fixed to the vehicle's chassis 21. On the other hand, it includes a brush (not represented) intended to limit the access of dirt inside the system 1 and intended to clean at the same time the support of the arm 3 during the movement of the carriage 5.

The windshield wiper system 1 is compatible with standard arms 3 and blades 2 in windshield wiper applications, although it is also possible to develop specific arms 3 and blades 3 for this type of applications.

Likewise, since one of the main industries for the application of the windshield wiper system of the present invention is the marine industry, the use of materials or treatments that improve resistance to corrosion in a saline maritime environment is expected.

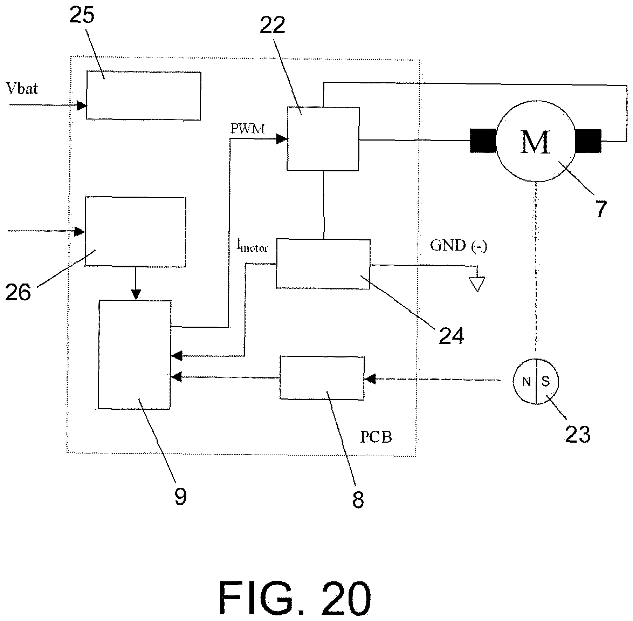

Making reference to the block diagram shown in Figure 20, the electronic control means are arranged on a printed circuit board (PCB) integrated into the motor 7 itself. The control means comprise:
- A Hall sensor 8
- A microprocessor 9
- A power stage 22
- A magnet 23
- A current sensor 24
- A voltage regulator 25
- Digital inputs 26

The microprocessor 9 is in charge of reversing the direction of the rotation of the motor 7 through a power stage 22 in charge of reversing the terminal polarity of the motor 7. Likewise, it has the capacity of accelerating and braking the motor 7 before and after these reversions, as will be explained below.

In order to establish the path of the carriage 5 and the acceleration and braking areas, a Hall sensor 8 is used, which is capable of reading a circular magnet 23 located on the driveshaft of the motor 7.

The stopped or parking position of the system 1 is executed by overconsumption with a current sensor 24 in charge of obtaining the current used by the motor 7. The microprocessor 9 sends to the motor 7 a voltage regulated by the power stage 22 which allows obtaining by overconsumption the starting position of the carriage 5 corresponding to an end of stroke of the guide 6. When said motor 7 reaches a certain limit, i.e. when the carriage 5 provides the necessary strength against one end, for example the left one, the system's zero point is attained. A voltage regulator 25 is also included.

Furthermore, said processor 9 is capable of processing some digital inputs 26 corresponding to the different modes of operation, and to send the motor 7 the respective commands to control parameters such as the reverse rotation of the motor 7, and the speed, acceleration and braking of the carriage 5 depending on the mode selected by the user, thus enabling to perform different types of sweeps depending on the needs.

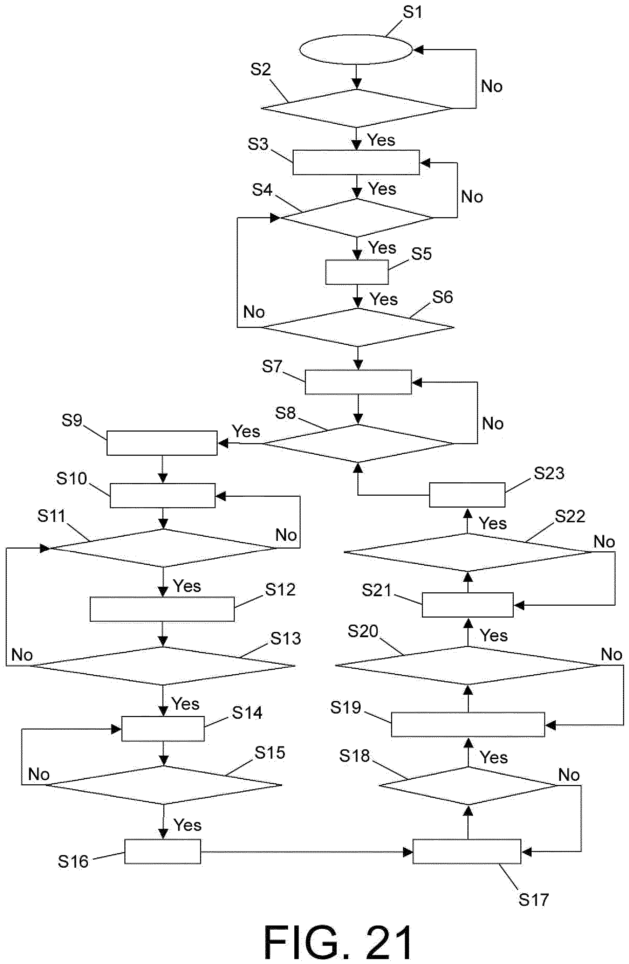

Described in greater detail below is the operation of the electronic control means through a flow chart shown in Figure 21, in accordance with a series of stages S1 to S23:
S1: Initialization
S2: Mode of operation
S3: Seek mechanical stop
S4: Im >= Max ? (Motor Intensity)
S5: Cont+1
S6: Cont >= No. Max ?
S7: Zero position OK
S8: Mode of operation
S9: Load parameters
S10: Acceleration GH
S11: Speed >= Max ?
S12: Constant speed GH
S13: Position = Brake position ?
S14: Braking GH
S15: Position = Final position ?
S16: Motor Stop
S17: Acceleration GAH
S18: PWM >= Max ? (Pulse Width Modulation)
S19: Constant speed GAH
S20: Position = Brake position ?
S21: Braking GAH
S22: Position = Initial position ?
S23: Motor Stop

First, when connecting the battery (Vbat) the system 1 is initialized (S1). Then, the system 1 waits for a starting input (digital input 26) to begin moving (S2). The first time, the system 1 only has one position reading, due to the Hall sensor 8 and the magnet 23, from 0° to 360° but it does not know at which turn it is.

To determine the starting position, the motor 7 receives large enough voltage regulated by the power amplifier (PWM) 22 so that when the carriage 5 experiences a mechanical stop on one of the ends (S3), the current (Im) used by the motor 7 is sufficiently large (S4) so as to ensure that it is actually the end of the guide (starting position). After this, a counter is checked for a predetermined number of times (S5; S6) to ensure the start or parking position (S7).

Once this starting position has been detected (S7), the operation mode (S8) that is running is checked, since each mode (digital inputs 26) may have different sweeping areas, such as: input 1 = full sweep; input 2 = half sweep; and input 3 = slower speed. Therefore, with the combination of digital inputs 26 the flexibility to perform one sweeping or another and at one speed or another is attained, depending on the needs. This is achieved due to some parameters that are saved in the non-volatile memory of the microprocessor 9.

Once the system 1 is in the known zero position (S7) (start) and the operating mode input (S8) is determined, the remaining parameters (S9) are loaded, which are:
- Maximum speed
- Travel start position
- Braking positions
- End of travel (there is a turn counter to be able to make large travels)
- Stipulated distance for braking
- Acceleration/braking index

Afterwards, the travel path is started with the motor 7 rotating clockwise (GH) from a minimum to a maximum speed that will increase depending on the acceleration index (S10). This is made to prevent very high current peaks that reduce the useful life of the system and to reduce shock on the mechanical parts. When the speed reaches the pre-determined maximum level (S11), the motor 7 rotates at a certain speed (S12) until the position Hall sensor 8 reaches the braking position (S13) in a clockwise direction, at this moment the system 1 begins to brake in a progressive manner (S14) to prevent wear caused by mechanical inertia. This braking lasts until the Hall sensor 8 reads the final position of travel (S15).

At this time, the motor 7 completely stops (S16), and voltage is applied on the opposite direction (S17) doing exactly the same as before (S18 to S22) but now in a counter-clockwise direction (GAH), until the travel start position is reached again (S23).

At this point, any activated inputs of operating mode (S8) are checked again and what was explained above is performed once more (S9 to S23). In case none is activated, the system remains stopped (S23).

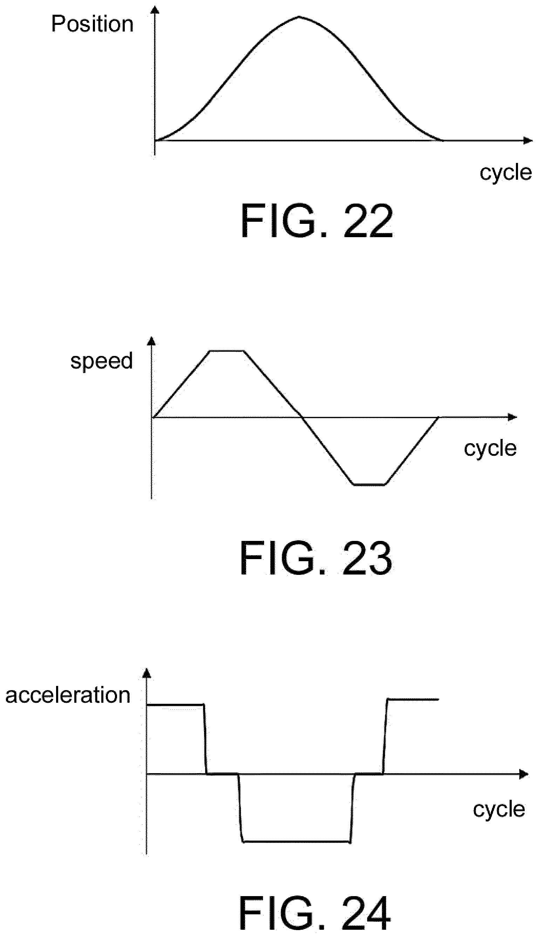

Shown in Figures 22, 23 and 24 respectively are the profiles for position, speed and acceleration that the arm 3 and wiper blade 2 execute actuated by the motor 7, electronically commanded, as has been described.

Even though a preferred embodiment of the invention has been referenced, it is evident for a person skilled in the art that the windshield wiper system of linear type described herein is capable of numerous variations and modifications, and that all of the aforementioned details may be substituted by other, technically-equivalent ones, without departing from the scope of protection as defined by the attached claims.

## Claims

1. Windshield wiper system of linear type (1) for vehicles, comprising a blade (2) attached to a wiper arm (3), a carriage (5,5') bearing said arm (3) capable of being driven along a fixed guide (6,6') according to an alternating to and fro motion, said guide (6,6') being provided with a profile substantially coincident with the sweeping profile of the windshield (4,4'), a motor (7) intended to actuate said carriage (5,5') by means of transmission means (15 to 18), and electronic control means (8, 9, 22 to 26) capable of regulating the movement of the carriage (5,5'), **characterized in that** the electronic control means (8, 9, 22 to 26) are integrated into the motor (7) itself, said control means including a single sensor (8) for the starting position of the carriage (5,5'), and a microprocessor (9) capable of monitoring the position and speed of the carriage (5,5'), with the capability of communicating with the vehicle, and capable of monitoring different pre-established sweeping patterns depending on the specific needs of the user, the control means comprising a magnet placed on the shaft of the motor, a Hall sensor associated with said magnet intended to read the position of the drive shaft, a voltage regulator, a current sensor intended to obtain the current consumed by the motor, the microprocessor being capable of receiving the signal from said Hall sensor, and sending to the motor a voltage regulated by a power stage, which allows obtaining by overconsumption the starting position of the carriage corresponding to an end of stroke of the guide.

2. Windshield wiper system (1), according to claim 1, wherein the guide (6,6') comprises a cross section profile, preferably with an oval shape, provided with two rounded upper and lower opposite ends (6a), and two slightly curved or flat opposite lateral sides (6b).

3. Windshield wiper system (1), according to claim 2, wherein the carriage (5,5') includes a support (10) provided with a connecting shaft (11) to the windshield wiper arm (3), and a housing (12) provided with two sections of sliding material (13) coupled by shape complementarity to both rounded ends (6a) of the guide (6,6'), and a set of wheels (14) intended to slide over both lateral sides (6b) of the guide (6,6').

4. Windshield wiper system (1), according to claim 3, wherein the carriage (5) includes two pairs of wheels (14), one pair of wheels (14) intended to be in contact with the upper part of one of the lateral sides (6b) of the guide (6), and the other pair of wheels (14) intended to be in contact with the lower part of the opposite lateral side (6b) of said guide (6).

5. Windshield wiper system (1), according to claim 3, wherein the carriage (5') includes four pairs of wheels (14), distributed for their coupling in both lateral sides (6b) of the guide (6') and in both upper and lower parts of said lateral sides (6b) of the guide (6').

6. Windshield wiper system (1), according to claim 1, wherein the guide (6) comprises a straight line profile, being applicable to substantially flat windshields (4).

7. Windshield wiper system (1), according to claim 1, wherein the guide (6') comprises a curved profile, being applicable to curved windshields (4').

8. Windshield wiper system (1), according to claims 5 and 7, wherein the housing (12) of the carriage (5') is divided into three parts, including a central structural part (12a) fixed to the support (10) of the arm (3), and two articulated parts (12b) on both ends of said central part (12a) provided with the respective sections of sliding material (13) and the wheels (14).

9. Windshield wiper system (1), according to claim 1, wherein the transmission means comprise a sprocket wheel (15) fixed to the output shaft of the motor (7), a closed loop toothed belt (16) driven by said sprocket wheel (15) and arranged between the two ends of stroke, said carriage (5,5') being fixed to the belt (16) so it can be dragged in a to and fro motion, and two pulleys (17) intended to the guidance of said belt.

10. Windshield wiper system (1), according to claim 9, wherein said pulleys (17) include tensioner elements (18) for said belt (16).

11. Windshield wiper system (1), according to claim 1, wherein it includes a front cover (19) attached to a rear support (20) of the guide (6,6') fixed to the chassis (21) of the vehicle.

12. Windshield wiper system (1), according to claim 1, wherein it includes a brush intended to limit the access of dirt inside the system (1) and also intended to clean at the same time an arm support (3) during the movement of the carriage.

## Patentansprüche

1. Scheibenwischersystem eines linearen Typs (1) für Fahrzeuge, das folgende Merkmale aufweist: ein Blatt (2), das an einem Wischerarm (3) befestigt ist, einen Wagen (5,5'), der den Arm (3) trägt, der entlang einer festen Führung (6,6') angetrieben werden kann gemäß einer abwechselnden Hin- und Herbewegung, wobei die Führung (6,6') mit einem Profil versehen ist, das im Wesentlichen übereinstimmt mit dem Streichprofil der Windschutzscheibe (4,4'), einen Motor (7), der dazu vorgesehen ist, den Wagen (5,5')durch eine Übertragungseinrichtung (15 bis 18) zu betätigen, und eine elektronische Steuereinrichtung (8, 9, 22 bis 26), die in der Lage ist, die Bewegung des Wagens (5,5') zu regeln, **dadurch gekennzeichnet, dass** die elektronische Steuereinrichtung (8, 9, 22 bis 26) in den Motor (7) selbst eingebaut ist, wobei die Steuereinrichtung einen einzelnen Sensor (8) umfasst für die Startposition des Wagens (5,5'), und einen Mikroprozessor (9), der in der Lage ist, die Position und Geschwindigkeit des Wagens (5,5') zu überwachen, mit der Fähigkeit, mit dem Fahrzeug zu kommunizieren, und in der Lage ist, unterschiedliche voreingestellte Streichmuster zu überwachen in Abhängigkeit von den spezifischen Bedürfnissen des Nutzers, wobei die Steuereinrichtung einen Magnet aufweist, der auf die Welle des Motors platziert ist, einen Hall-Sensor, der dem Magnet zugeordnet ist, der dazu vorgesehen ist, die Position der Antriebswelle zu lesen, einen Spannungsregler, einen Stromsensor, der dazu vorgesehen ist, den durch den Motor aufgenommenen Strom zu erhalten, wobei der Mikroprozessor in der Lage ist, das Signal von dem Hallo-Sensor zu empfangen und an den Motor eine Spannung zu senden, die durch eine Leistungsstufe geregelt wird, wodurch ermöglicht wird, durch übermäßige Aufnahme, die Startposition des Wagens zu erhalten, die einem Ende eines Hubs der Führung entspricht.

2. Scheibenwischersystem (1) gemäß Anspruch 1, bei dem die Führung (6,6') ein Querschnittsprofil aufweist, vorzugsweise mit einer ovalen Form, versehen mit zwei abgerundeten oberen und unteren gegenüberliegenden Enden (6a) und zwei leicht gekrümmten oder flachen gegenüberliegenden seitlichen Seiten (6b).

3. Scheibenwischersystem (1) gemäß Anspruch 2, bei dem der Wagen (5,5') einen Träger (10) umfasst, der mit einer Verbindungswelle (11) zu dem Scheibenwischerarm (3) versehen ist, und ein Gehäuse (12), das mit zwei Abschnitten eines Gleitmaterials (13) versehen ist, das durch Formübereinstimmung mit beiden abgerundeten Enden (6a) der Führung (6,6') gekoppelt ist und einen Satz von Rädern (14), der dazu vorgesehen ist, über beide seitlichen Seiten (6b) der Führung (6,6') zu gleiten.

4. Scheibenwischersystem (1) gemäß Anspruch 3, bei dem der Wagen (5) zwei Paare von Rädern (14) umfasst, wobei ein Paar von Rädern (14) dazu vorgesehen ist, in Kontakt mit dem oberen Teil von einer der seitlichen Seiten (6b) der Führung (6) zu sein, und das andere Paar von Rädern (14) dazu vorgesehen ist, in Kontakt mit dem unteren Teil der gegenüberliegenden seitlichen Seite (6b) der Führung (6) zu sein.

5. Scheibenwischersystem (1) gemäß Anspruch 3, bei dem der Wagen (5') vier Paare von Rädern (14) umfasst, die für ihre Kopplung in beiden seitlichen Seiten (6b) der Führung (6')und in beiden oberen und unteren Teilen der seitlichen Seiten (6b) der Führung (6') verteilt sind.

6. Scheibenwischersystem (1) gemäß Anspruch 1, bei dem die Führung (6) ein Geradenprofil aufweist, das auf im Wesentlichen flache Windschutzscheiben (4) anwendbar ist.

7. Scheibenwischersystem (1) gemäß Anspruch 1, bei dem die Führung (6') ein gekrümmtes Profil aufweist, das auf gekrümmte Windschutzscheiben (4') anwendbar ist.

8. Scheibenwischersystem (1) gemäß Ansprüchen 5 und 7, bei dem das Gehäuse (12) des Wagens (5') in drei Teile unterteilt ist, einschließlich eines zentralen strukturellen Teils (12a), der an dem Träger (10) des Arms (3) fixiert ist und zwei gelenkigen Teilen (12b) an beiden Enden des Mittelteils (12a), die mit den jeweiligen Abschnitten des Gleitmaterials (13) und der Räder (14) versehen sind.

9. Scheibenwischersystem (1) gemäß Anspruch 1, bei dem die Übertragungseinrichtung ein Kettenrad (15) aufweist, das an der Ausgangswelle des Motors (7) fixiert ist, einen Geschlossene-Schleife-Zahnriemen (16), der durch das Kettenrad (15) angetrieben wird und zwischen den zwei Enden des Hubs angeordnet ist, wobei der Wagen (5,5') an dem Riemen (16) fixiert ist, so dass derselbe in eine Hin- und Herbewegung gezogen werden kann, und zwei Riemenscheiben (17), die für die Führung des Riemens vorgesehen sind.

10. Scheibenwischersystem (1) gemäß Anspruch 9, bei dem die Riemenscheiben (17) Spannerelemente (18) für den Riemen (16) umfassen.

11. Scheibenwischersystem (1) gemäß Anspruch 1, wobei dasselbe eine vordere Abdeckung (19) umfasst, die an einem hinteren Träger (20) der Führung (6,6') befestigt ist, fixiert an dem Chassis (21) des Fahrzeugs.

12. Scheibenwischersystem (1) gemäß Anspruch 1, wobei dasselbe eine Bürste umfasst, die dazu vorgesehen ist, Eindringen von Schmutz in das System (1) zu begrenzen und auch dazu vorgesehen ist, gleichzeitig während der Bewegung des Wagens einen Armträger (3) zu reinigen.

## Revendications

1. Système d'essuie-glace de type linéaire (1) pour véhicules, comprenant un balai (2) fixé à un bras d'essuie-glace (3), un chariot (5,5') supportant ledit bras (3) pouvant être entraîné le long d'un guide fixe (6,6') en suivant un mouvement alternatif de va-et-vient, ledit guide (6,6') étant équipé d'un profilé substantiellement coïncidant avec le profil de balayage du parebrise (4,4'), un moteur (7) destiné à activer ledit chariot (5,5') au moyen de moyens de transmission (15 à 18), et des moyens de contrôle électronique (8, 9, 22 à 26) pouvant réguler le mouvement du chariot (5,5'), **caractérisé en ce que** les moyens de contrôle électronique (8, 9, 22 à 26) sont intégrés au moteur (7) lui-même, lesdits moyens de contrôle comprenant un capteur unique (8) pour la position de départ du chariot (5,5'), et un microprocesseur (9) en mesure de suivre la position et la vitesse du chariot (5,5'), avec la possibilité de communiquer avec le véhicule, et être en mesure de suivre les différents schémas de balayage prédéfinis selon les besoins spécifiques de l'utilisateur, les moyens de contrôle comprenant un aimant placé sur l'arbre du moteur, un capteur à effet Hall associé audit aimant destiné à lire la position de l'arbre d'entraînement, un régulateur de tension, un capteur de courant destiné à obtenir le courant consommé par le moteur, le microprocesseur pouvant recevoir le signal dudit capteur à effet Hall, et envoyer au moteur une tension régulée par un étage de puissance, qui permet d'obtenir par surconsommation la position de départ du chariot correspondant à une fin de course du guide.

2. Système d'essuie-glace (1), selon la revendication 1, dans lequel le guide (6,6) comprenant un profil de coupe, préférablement de forme ovale, équipé de deux extrémités arrondies supérieure et inférieure opposées (6a), et deux parois latérales opposées (6b) légèrement incurvées ou plates.

3. Système d'essuie-glace (1), selon la revendication 2, dans lequel le chariot (5,5') comprend un support (10) équipé d'un arbre de connexion (11) à un bras d'essuie-glace (3), et un boîtier (12) équipé de deux sections de matériau glissant (13) complémentairement couplées par leur forme aux deux extrémités arrondies (6a) du guide (6,6'), et un jeu de roues (14) destinées à rouler sur les deux parois latérales (6b) du guide (6,6').

4. Système d'essuie-glace (1), selon la revendication 3, dans lequel le chariot (5) comprend deux paires de roues (14), une paire de roues (14) étant destinée à être en contact avec la partie supérieure de l'une des parois latérales (6b) du guide (6), et une autre paire de roues (14) destinées à être en contact avec la partie inférieure de la paroi latérale opposée (6b) dudit guide (6).

5. Système d'essuie-glace (1), selon la revendication 3, dans lequel le chariot (5') comprend quatre paires de roues (14), distribuées pour leur couplage sur les deux parois latérales (6b) du guide (6'), et sur les parties supérieure et inférieure desdites parois latérales (6b) du guide (6').

6. Système d'essuie-glace (1), selon la revendication 1, dans lequel le guide (6) comprend un profilé en ligne droite, pouvant s'appliquer à des pare-brises substantiellement plats (4).

7. Système d'essuie-glace (1), selon la revendication 1, dans lequel le guide (6') comprend un profilé incurvé, pouvant s'appliquer à des pare-brises incurvés (4').

8. Système d'essuie-glace (1), selon les revendications 5 et 7, dans lequel le boîtier (12) du chariot (5') est divisé en trois parties, comprenant une partie structurelle centrale (12a) fixée au support (10) du bras (3), et deux parties articulées (12b) aux deux extrémités de ladite partie centrale (12a) équipées des sections respectives de matériau glissant (13) et de roues (14).

9. Système d'essuie-glace (1), selon la revendication 1, dans lequel les moyens de transmission comprennent une roue dentée (15) fixée sur l'arbre de sortie du moteur (7), une courroie dentée en boucle fermée (16) entraînée par ladite roue dentée (15) et disposée entre les deux fins de course, ledit chariot (5,5') étant fixé à la courroie (16) afin de pouvoir être traîné dans un mouvement de va-et-vient, et deux poulies (17) destinées au guidage de ladite courroie.

10. Système d'essuie-glace (1), selon la revendication 9, dans lequel lesdites poulies (17) comprennent des éléments tendeurs (18) pour ladite courroie (16).

11. Système d'essuie-glace (1), selon la revendication 1, dans lequel il comprend un couvercle avant (19) fixé à un support arrière (20) du guide (6,6') fixé au châssis (21) du véhicule.

12. Système d'essuie-glace (1), selon la revendication 1, dans lequel il comprend un balai destiné à limiter l'accès de la saleté à l'intérieur du système (1) et destiné également à nettoyer en même temps un support de bras (3) pendant le mouvement du chariot.
